# EUROPEAN PATENT SPECIFICATION

(11) **EP 4 547 356 B1**
(45) Date of publication and mention of the grant of the patent: **28.10.2026**
(21) Application number: 23786363.4
(22) Date of filing: 01.09.2023
(51) Int. Cl.: A63F 13/24

(54) **GAME CONTROLLER WITH MAGNETIC WIRELESS CONNECTOR**
SPIELSTEUERUNG MIT MAGNETISCHEM DRAHTLOSEM VERBINDER
CONTRÔLEUR DE JEU AVEC CONNECTEUR SANS FIL MAGNÉTIQUE

(30) Priority: 01.07.2022 US 202217856895
(43) Date of publication of application: 07.05.2025
(73) Proprietor: Backbone Labs, Inc., Vancouver, WA 98660-3303 (US)
(72) Inventor: KHAIRA, Maneet Singh, Vancouver, WA 98660 (US); SCOTT, Zachary, Vancouver, WA 98660 (US); SORENSEN, Eric, Vancouver, WA 98660 (US); MAKER, Ozhan, Vancouver, WA 98660 (US); LAKE, Jon Christopher, Palo Alto, CA 94301 (US)
(74) Representative: EIP
(86) International application number: PCT/US2023/031919
(87) International publication number: WO 2024/006587

(56) References cited:
- CN-A- 107 008 005
- CN-U- 207 838 250
- US-A1- 2021 275 907
- US-A1- 2022 096 923
- US-B1- 10 868 436

## Description

### TECHNICAL FIELD

The subject matter is related to an apparatus and methods for a game controller for a mobile device.

### BACKGROUND

A game controller is a device used to provide input to a video game, for example to control an object or character in the video game. The video game may be running on a computer, a specially designed gaming system, or a mobile device. In some prior art devices, the game controller is designed to mechanically couple to a mobile device.

US 2022/096923 A1 discusses accessories that can attach to an electronic device. One example is a gaming accessory that provides a physical interface for controlling game activities on the electronic device. The gaming accessory can attach to the electronic device by an attachment feature including a magnet.

Configurations of the disclosed technology address shortcomings in the prior art. An aspect of the invention is defined in appended claim 1.

### BRIEF DESCRIPTION OF THE DRAWINGS

FIG. 1 is a perspective view of a game controller.
FIGs. 2-4 are each top views of the game controller of FIG. 1, collectively showing an example process of how the game controller may contact and support an example mobile device.
FIG. 5 is a front, partial sectional view of the game controller of FIG. 1 in an example of a retracted configuration of the game controller.
FIG. 6 is a front, partial sectional view of the game controller of FIG. 1 in an example of an extended configuration of the game controller.
FIG. 7 is a close-up of a portion of the game controller of FIGs. 5 and 6, illustrating an example latch mechanism in an unlatched configuration.
FIG. 8 is a close-up of a portion of the game controller of FIGs. 5 and 6, illustrating the example latch mechanism of FIG. 7 in a latched configuration.
FIG. 9 is a close-up of a portion of a first alternative arrangement for the game controller of FIGs. 5 and 6, illustrating an example latch mechanism in an unlatched configuration.
FIG. 10 is a close-up of a portion of a first alternative arrangement for the game controller of FIGs. 5 and 6, illustrating the example latch mechanism of FIG. 9 in a latched configuration.
FIG. 11 is a close-up of a portion of a second alternative arrangement for the game controller of FIGs. 5 and 6, illustrating an example latch mechanism in an unlatched configuration.
FIG. 12 is a close-up of a portion of a second alternative arrangement for the game controller of FIGs. 5 and 6, illustrating the example latch mechanism of FIG. 11 in a latched configuration.
FIG. 13 is a close-up of a portion of a third alternative arrangement for the game controller of FIGs. 5 and 6, illustrating an example latch mechanism in an unlatched configuration.
FIG. 14 is a close-up of a portion of a third alternative arrangement for the game controller of FIGs. 5 and 6, illustrating the example latch mechanism of FIG. 13 in a latched configuration.
FIG. 15 is a close-up of a portion of a fourth alternative arrangement for the game controller of FIGs. 5 and 6, illustrating an example latch mechanism in an unlatched configuration.
FIG. 16 is a close-up of a portion of a fourth alternative arrangement for the game controller of FIGs. 5 and 6, illustrating the example latch mechanism of FIG. 15 in a latched configuration.
FIG. 17 is a perspective view of a game controller, according to embodiments.
FIG. 18 is a top view of the game controller of FIG. 17, shown with an example mobile device.

### DETAILED DESCRIPTION

As described in this disclosure, aspects are directed to a game controller for a mobile device with a hold-open feature.

Keeping the handles pulled apart while inserting the mobile device into a game controller can be difficult. For example, a user holding a mobile device in the user's right hand may need to use the user's left hand to pull the two handles apart when placing the mobile device between the two handles of the game controller. This difficulty with insertion may be exacerbated when the game controller connects to the mobile device via a connector, such as USB-C connector, because the user must also ensure that the mobile device is aligned with the connector when inserting it. The removal of the mobile device may be equally vexing as the user must once again attempt to pull the two handles apart with one hand.

But in embodiments of the disclosed game controller, once the handles are pulled apart sufficiently, the handles lock in place, allowing the user to easily insert the mobile device. Then, by applying light pressure on the handles, the user can unlock the handles and snap the device shut, securing the mobile device to the game controller.

With regard to terminology used in this disclosure, it is noted that the "first" and "second" designation is largely arbitrary, meaning, for example, that the choice of which of the two handles is the "first handle" and which is the "second handle" is not critical unless the context requires otherwise. Hence, while the drawings illustrate the second handle **102** as being on the right side of the game controller **100** and the first handle **101** as being on the left side of the game controller **100,** it could also be that the handle designated as being the second handle **102** is on the left side of the game controller **100** and the handle designated as being the first handle **101** is on the right side of the game controller **100.** For that reason, features that are described in this Detailed Description as being on the "second handle," for example, may be claimed as being on the "first handle" to avoid the potentially confusing situation of reciting a "second" without a "first."

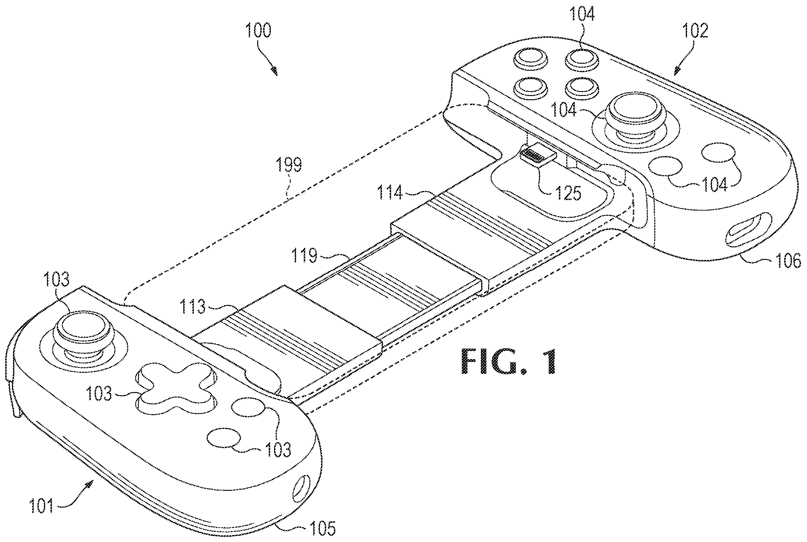

FIG. 1 is a perspective view showing portions of a game controller **100,** according to embodiments. As illustrated in FIG. 1, a game controller **100** may include a first handle **101,** a second handle **102,** and a bridge **119.** Each of the first handle **101** and the second handle **102** is configured to contact and support a mobile device **199,** though not all contemplated embodiments will include the second handle **102.** An exemplary mobile device **199** is shown in broken lines to illustrate how the game controller **100** may contact and support a mobile device **199** in some embodiments. The mobile device **199** may be, as examples, a smartphone or a tablet computer.

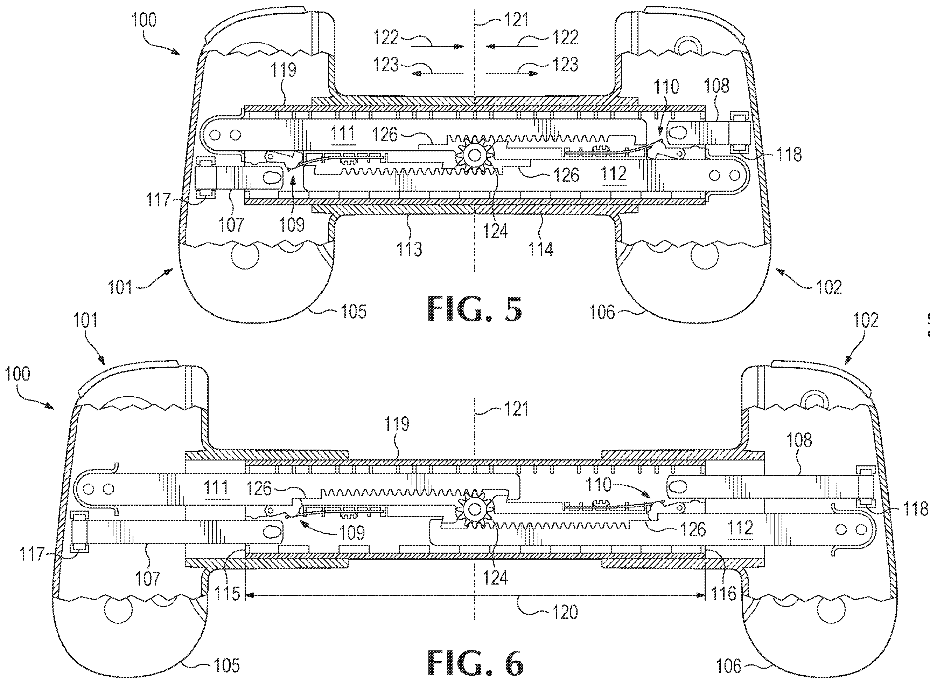

As illustrated in FIG. 1, the first handle **101** includes a guide portion **113** and a main body portion **105.** The guide portion **113** extends from the main body portion **105** and along a first end **115** of the span **120** of the bridge **119.** (See also FIGs. 5 and 6.) The guide portion **113** of the first handle **101** is configured to align the bridge **119** with the main body portion **105** of the first handle **101.**

As illustrated, the first handle **101** includes a user-accessible, first hardware interface **103** on the main body portion **105** of the first handle **101.** The first hardware interface **103** could be a button, an analog stick, a touchscreen, a touchpad, a knob, a slider, a switch, a wheel, a dial, a directional pad, or another such feature configured to accept touch inputs from a user's finger or a stylus. As shown in FIG. 1, the first hardware interface **103** may include multiple such hardware interfaces.

Likewise, the second handle **102** includes a guide portion **114** and a main body portion **106.** The guide portion **114** extends from the main body portion **106** and along a second end **116** of the span **120** of the bridge **119.** (See also FIGs. 5 and 6.) The guide portion **114** of the second handle **102** is configured to align the bridge **119** with the main body portion **106** of the second handle **102.**

As illustrated, the second handle **102** further includes a user-accessible, second hardware interface **104** on the main body portion **106** of the second handle **102.** As above for the first hardware interface **103** of the first handle **101,** the second hardware interface **104** could be a button, an analog stick, a touchscreen, a touchpad, a knob, a slider, a switch, a wheel, a dial, a directional pad, or another such feature configured to accept touch inputs from a user's finger or a stylus. The second hardware interface **104** may include multiple such hardware interfaces, as illustrated in FIG. 1.

One or both of the first handle **101** and the second handle **102** may include a connector **125** for physical and electrical connection to the mobile device **199.** The connector **125** may be, for example, a USB-C connector.

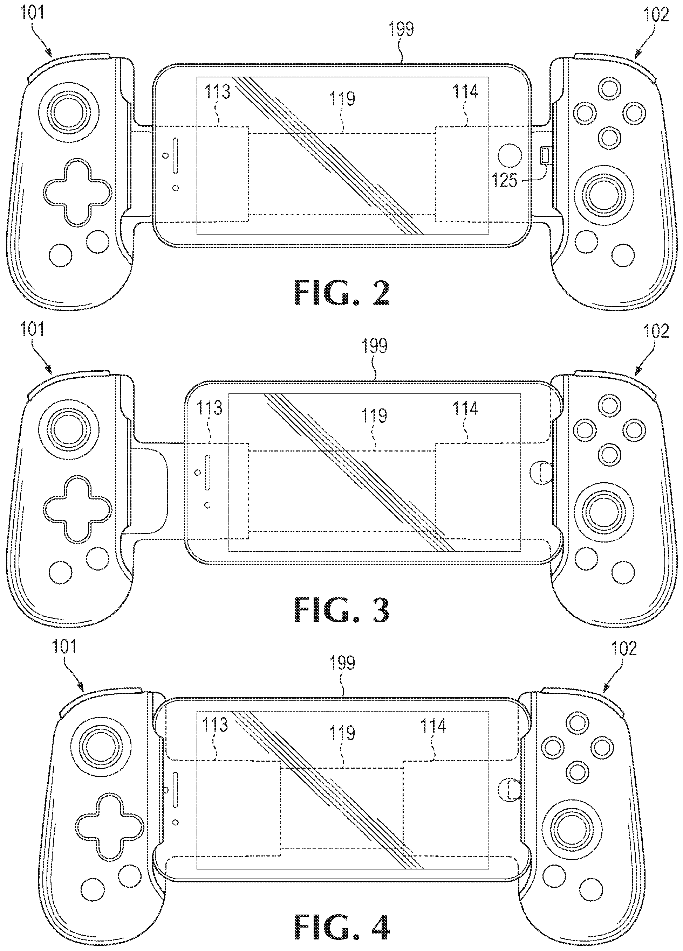

FIGs. 2-4 are top views of the game controller **100** of FIG. 1, showing an example process of how the game controller **100** may contact and support an example mobile device **199.** As illustrated in FIG. 2, the mobile device **199** may be placed over the bridge **119,** between the first handle **101** and the second handle **102** of the game controller **100.** As illustrated in FIG. 3, the connector **125** of the game controller **100** may be joined with a corresponding connector on the mobile device **199.** FIGs. 2 and 3 show examples of an extended configuration of the game controller **100.** In FIG. 4, the mobile device **199** is secured between the first handle **101** and the second handle **102** of the game controller **100.** FIG. 4 illustrates an example of a retracted configuration of the game controller **100.** The extended configuration and the retracted configuration of the game controller **100** will be described in more detail below. The reader will note, though, that there is more than one retracted configuration. For example, FIG. 4 illustrates an example of a retracted configuration when the game controller **100** is securing a mobile device **199.** As another example, FIG. 5 (described below) illustrates an example of a retracted configuration when the game controller **100** is not securing a mobile device **199.**

FIG. 5 is a front, partial sectional view of the game controller **100** of FIG. 1 in an example of a retracted configuration of the game controller **100.** FIG. 6 is a front, partial sectional view of the game controller **100** of FIG. 1 in an example of an extended configuration of the game controller **100.** As illustrated in FIGs. 5-6, a game controller **100** may include a first handle **101,** a second handle **102,** and a bridge **119,** each as described above for FIGs. 1-4. In each of FIGs. 5-6, external portions of the first handle **101,** the second handle **102,** and the bridge **119** are not shown to make certain internal features visible.

As illustrated, the bridge **119** is in sliding engagement with the first handle **101.** As illustrated, the bridge **119** is not telescoping, meaning that segments of the bridge **119** do not slide within another segment of the bridge **119** to allow for lengthening or shortening of the bridge **119.** The bridge **119** has a span **120** extending away from the main body portion **105** of the first handle **101,** and the span **120** has a transverse midline **121.**

The bridge **119** and the first handle **101** are configured to allow the main body portion **105** of the first handle **101** to translate in a retraction direction **122** toward the midline **121** of the bridge **119** and into a retracted configuration, such as one of the example retracted configurations illustrated in FIGs. 4 or 5. The bridge **119** and the first handle **101** are configured to allow the main body portion **105** of the first handle **101** to also translate in an extension direction **123** away from the midline **121** of the bridge **119** into an extended configuration, such as one of the example extended configurations illustrated in FIGs. 2 or 6.

As used in this disclosure, the transverse midline **121** of the bridge **119** is a reference datum used to define the extension direction **123** and the retraction direction **122.** That is, the retraction direction **122** is toward the transverse midline **121,** while the retraction direction **122** is away from the transverse midline **121.** Accordingly, the transverse midline **121** of the bridge **119** may or may not coincide with a physical structure on the game controller **100.**

Likewise, the bridge **119,** as illustrated, is in sliding engagement with the second handle **102,** and the span **120** of the bridge **119** extends away from the main body portion **106** of the second handle **102.** The bridge **119** and the second handle **102** are configured to allow the main body portion **106** of the second handle **102** to translate in the retraction direction **122** toward the midline **121** of the bridge **119** and into the retracted configuration. The bridge **119** and the second handle **102** are configured to allow the main body portion **106** of the second handle **102** to also translate in the extension direction **123** away from the midline **121** of the bridge **119** into the extended configuration.

As illustrated in FIGs. 5-6, the game controller **100** may also include a first spring mechanism **107,** a second spring mechanism **108,** a first latch mechanism **109,** a second latch mechanism **110,** a first linear rack **111,** a second linear rack **112,** and a pinion **124.** These are described below.

The first spring mechanism **107** is configured to bias the first handle **101** toward the retracted configuration. In addition, the first spring mechanism **107** exerts a first retraction force on the first latch mechanism **109** in the retraction direction **122.** As illustrated, the first spring mechanism **107** may be attached to the first handle **101** through a shaft **117** and is also attached to the bridge **119.** The first spring mechanism **107** may be or include a first constant-load spring connecting the first handle **101** to the bridge **119.** The first constant-load spring is configured to exert a substantially constant force on the first handle **101** in the retraction direction **122.** As used in this disclosure, "substantially constant" means largely or essentially invariable, yet without requiring perfect constancy, as the game controller **100** transitions from the retracted configuration to the extended configuration and from the extended configuration to the retracted configuration.

The second spring mechanism **108** is configured to bias the second handle **102** toward the retracted configuration. In addition, the second spring mechanism **108** exerts a second retraction force on the second latch mechanism **110** in the retraction direction **122.** As illustrated, the second spring mechanism **108** is attached to the second handle **102** through a shaft **118** and is also attached to the bridge **119.** The second spring mechanism **108** may be or include a second constant-load spring connecting the second handle **102** to the bridge **119.** The second constant-load spring is configured to exert a substantially constant force on the second handle **102** in the retraction direction **122.**

The first latch mechanism **109** is configured to temporarily lock the bridge **119** in the extended configuration. The first latch mechanism **109** is further configured to require a first disengagement force in the retraction direction **122** to unlock the bridge **119** from the extended configuration. The first disengagement force is greater than the first retraction force exerted by the first spring mechanism **107** in the retraction direction **122.** The additional force (that is, that portion of the first disengagement force that exceeds the first retraction force) may be provided by, for example, pressure from the user's hands exerted in the retraction direction **122.**

Likewise, the second latch mechanism **110** is configured to temporarily lock the bridge **119** in the extended configuration. The second latch mechanism **110** is further configured to require a second disengagement force in the retraction direction **122** to unlock the bridge **119** from the extended configuration. The second disengagement force is greater than the second retraction force exerted by the second spring mechanism **108** in the retraction direction **122.** The additional force (that is, that portion of the second disengagement force that exceeds the second retraction force) may be provided by, for example, pressure from the user's hands exerted in the retraction direction **122.**

As illustrated, the first linear rack **111** is coupled to the first handle **101** and is in sliding engagement with the bridge **119.** The first linear rack **111** extends substantially along the span **120** of the bridge **119.** As used in this disclosure, "substantially along" means largely or essentially in the direction of, without requiring perfect conformity. The first linear rack **111** may further include a step **126** or indentation, which may engage with the first latch mechanism **109** as described more fully below. As used in this disclosure, "to engage" means "to interlock with; to fit together."

The second linear rack **112** is coupled to the second handle **102** and is in sliding engagement with the bridge **119.** The second linear rack **112** extends substantially along the span **120** of the bridge **119.** The second linear rack **112** may further include a step **126,** which may engage with the second latch mechanism **110** as described more fully below.

As illustrated, the pinion **124** is affixed to the bridge **119.** The pinion **124** is in contact with each of the first linear rack **111** and the second linear rack **112.** The pinion **124** is configured to rotate relative to the bridge **119** as the first linear rack **111** is translated relative to the pinion **124.** The pinion **124** is also configured to rotate as the second linear rack **112** is translated relative to the pinion **124.**

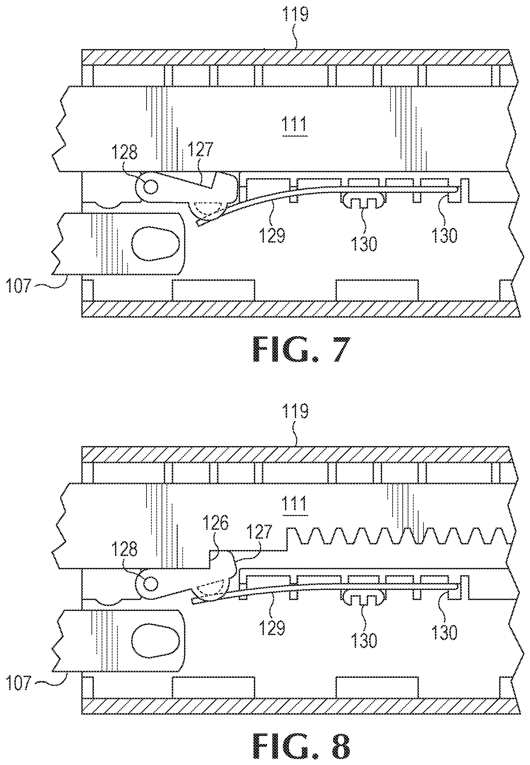

FIG. 7 is a close-up of a portion of the game controller **100** of FIGs. 5 and 6, illustrating an example latch mechanism in an unlatched configuration. FIG. 8 is a close-up of a portion of the game controller **100** of FIGs. 5 and 6, illustrating the example latch mechanism of FIG. 7 in a latched configuration. While illustrated and described for the first-handle side of the game controller **100,** the discussion for FIGs. 7 and 8 applies equally to the second-handle side of the game controller **100.** Hence, the example latch mechanism of FIGs. 7 and 8 may be the first latch mechanism **109** described above for FIGs. 5 and 6, the second latch mechanism **110** described above for FIGs. 5 and 6, or both the first latch mechanism **109** and the second latch mechanism **110.**

As illustrated in FIGs. 7 and 8, the example latch mechanism may include a catch **127** coupled to the bridge **119.** The catch **127** is configured to contact and engage the step **126** on the first linear rack **111** in the extended configuration and disengage from the step **126** on the first linear rack **111** in the retracted configuration. To facilitate the engagement and disengagement of the catch **127** from the step **126,** the step **126** may be angled or rounded, or a portion of the catch **127** facing the step **126** may be angled or rounded, or both.

As illustrated, the catch **127** is coupled to the bridge **119** through a pivot **128.** The first latch mechanism **109** may also include a cantilevered spring **129** configured to apply a torque to the catch **127** about the pivot **128** to bias the catch **127** against the first linear rack **111.** The cantilevered spring **129** may be coupled to the bridge **119** by one or more attachment points **130.**

With particular reference to FIGs. 2-8, in use the game controller **100** may initially be in a retracted configuration, such as the retracted configuration illustrated in FIG. 5. In the retracted configuration, the catch **127** is disengaged from the step **126** on the first linear rack **111.** In versions having a catch **127** on a second linear rack **112** (also or instead of the catch **127** on the first linear rack **111),** in the retracted configuration, the catch **127** is disengaged from the step **126** on the second linear rack **112.**

Then, the user may apply a force (using, for example, the user's hands) to the first handle **101** or the second handle **102,** or both, in the extension direction **123** to move the game controller **100** into an extended configuration, such as the extended configurations illustrated in FIGs. 1, 2, and 6. In other words, the user may pull the first handle **101** and the second handle **102** apart from each other.

In transitioning to the extended configuration, the first linear rack **111** slides relative to the catch **127** for the first end **115** of the span **120** until that catch **127** is aligned with the step **126** in the first linear rack **111.** During the transition, the first spring mechanism **107** continues to bias the first handle **101** toward the retracted configuration and exerts a first retraction force on the first latch mechanism **109** in the retraction direction **122.** The cantilevered spring **129** then causes the catch **127** for the first end **115** of the span **120** to engage the step **126** of the first linear rack **111** by forcing the catch **127** into the step **126.** The first latch mechanism **109** is now temporarily locking the bridge **119** in the extended configuration by way of the catch **127.**

In versions having a catch **127** on a second linear rack **112** (also or instead of the catch **127** on the first linear rack **111),** in transitioning to the extended configuration, the second linear rack **112** slides relative to the catch **127** for the second end **116** of the span **120** until the catch **127** is aligned with the step **126** in the second linear rack **112.** During the transition, the second spring mechanism **108** continues to bias the second handle **102** toward the retracted configuration and exerts a second retraction force on the second latch mechanism **110** in the retraction direction **122.** The cantilevered spring **129** then causes the catch **127** for the second end **116** of the span **120** to engage the step **126** of the second linear rack **112** by forcing the catch **127** into the step **126.** The second latch mechanism **110** is now temporarily locking the bridge **119** in the extended configuration by way of the catch **127.**

With the bridge **119** temporarily locked in the extended configuration, the user may then insert a mobile device **199** into the game controller **100** by placing the mobile device **199** over the bridge **119,** such as illustrated in FIG. 2. If necessary, the connector **125** of the game controller **100** may then be joined with a corresponding connector on the mobile device **199,** such as illustrated in FIG. 3.

To unlock the hold-open feature, where the bridge **119** is temporarily locked in the extended configuration, and return the game controller **100** to a retracted configuration, the user typically applies a force to the first handle **101** in the retraction direction **122.** This user-applied force, coupled with the first retraction force exerted by the first spring mechanism **107,** causes the catch **127** for the first end **115** of the span **120** to disengage from the step **126** in the first linear rack **111.** Once disengaged, the first retraction force exerted by the first spring mechanism **107** causes the game controller **100** to transition to a retracted configuration.

In versions having a catch **127** on a second linear rack **112** (also or instead of the catch **127** on the first linear rack **111),** the user may apply a force to the second handle **102** in the retraction direction **122.** This user-applied force, coupled with the second retraction force exerted by the second spring mechanism **108,** causes the catch **127** for the second end **116** of the span **120** to disengage from the step **126** in the second linear rack **112.** Once disengaged, the second retraction force exerted by the second spring mechanism **108** causes the game controller **100** to transition to a retracted configuration.

Since moving the game controller **100** from the retracted configuration to the extended configuration is often done by using both of the user's hands (such as, for example, one hand on each of the first handle **101** and the second handle **102),** the hold-open feature allows the user-once the game controller **100** is temporarily locked in the extended configuration-to remove one or both of the user's hands from the game controller **100** (such as, for example, from either the first handle **101** or the second handle **102,** or both) to manipulate the mobile device **199** into position, such as the position illustrated in FIG. 2. Hence, embodiments of the disclosed technology allow the user to efficiently and easily insert and remove a mobile device **199** from the game controller **100.**

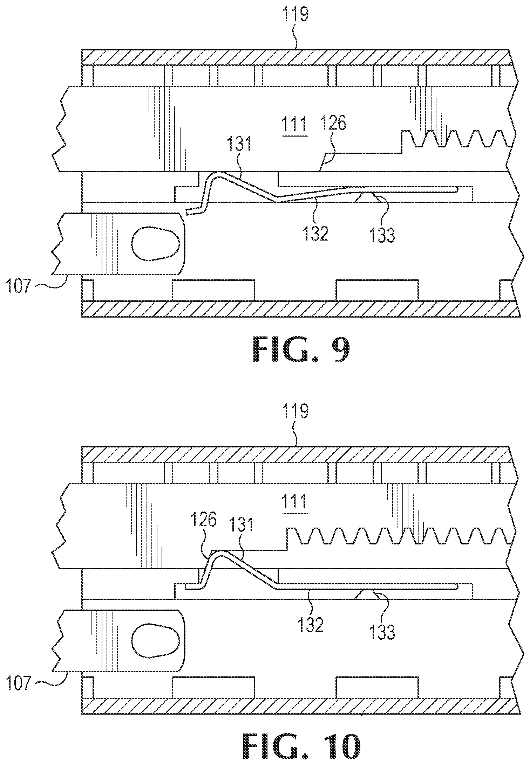

FIG. 9 is a close-up of a portion of an alternative arrangement for the game controller **100** of FIGs. 5 and 6, illustrating an example latch mechanism in an unlatched configuration. FIG. 10 is a close-up of a portion of an alternative arrangement for the game controller **100** of FIGs. 5 and 6, illustrating the example latch mechanism of FIG. 9 in a latched configuration. While illustrated and described for the first-handle side of the game controller **100,** the discussion for FIGs. 9 and 10 applies equally to the second-handle side of the game controller **100.** Hence, the example latch mechanism of FIGs. 9 and 10 may be the first latch mechanism **109** described above for FIGs. 5 and 6, the second latch mechanism **110** described above for FIGs. 5 and 6, or both the first latch mechanism **109** and the second latch mechanism **110.**

As illustrated in FIGs. 9 and 10, the example latch mechanism may include a tension spring **132** coupled to the bridge **119.** An engagement portion **131** of the tension spring **132** is configured to contact and engage the step **126** on the first linear rack **111 in** the extended configuration and disengage from the step **126** on the first linear rack **111 in** the retracted configuration. To facilitate the engagement and disengagement of the catch **127** from the step **126,** the step **126** may be angled or rounded.

As illustrated, the tension spring **132** is coupled to the bridge **119** through one or more attachment points **133.** The tension spring **132** is configured to bias the engagement portion **131** of the tension spring **132** against the first linear rack **111.** The engagement portion **131** is configured to engage the step **126** in the extended configuration.

Accordingly, in transitioning from the retracted configuration (an example of which is illustrated in FIG. 9) to the extended configuration (an example of which is illustrated in FIG. 10), the first linear rack **111** slides relative to the engagement portion **131** of the tension spring **132** until the engagement portion **131** is aligned with the step **126** in the first linear rack **111.** The tension spring **132** then causes the engagement portion **131** to engage the step **126** of the first linear rack **111** by forcing the engagement portion **131** into the step **126.** Likewise, in transitioning from the extended configuration to the retracted configuration, the engagement portion **131** of the tension spring **132** is disengaged from the step **126** in the first linear rack **111.** Otherwise, operation of this example latch mechanism is substantially as described above for FIGs. 2-8.

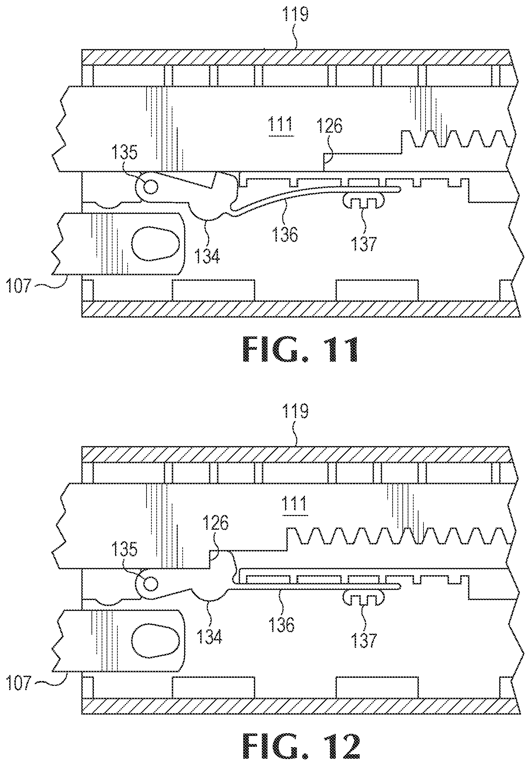

FIG. 11 is a close-up of a portion of an alternative arrangement for the game controller **100** of FIGs. 5 and 6, illustrating an example latch mechanism in an unlatched configuration. FIG. 12 is a close-up of a portion of an alternative arrangement for the game controller **100** of FIGs. 5 and 6, illustrating the example latch mechanism of FIG. 11 in a latched configuration. While illustrated and described for the first-handle side of the game controller **100,** the discussion for FIGs. 11 and 12 applies equally to the second-handle side of the game controller **100.** Hence, the example latch mechanism of FIGs. 11 and 12 may be the first latch mechanism **109** described above for FIGs. 5 and 6, the second latch mechanism **110** described above for FIGs. 5 and 6, or both the first latch mechanism **109** and the second latch mechanism **110.**

As illustrated in FIGs. 11 and 12, the example latch mechanism may include a catch **134** coupled to the bridge **119.** The catch **134** is configured to contact and engage the step **126** on the first linear rack **111** in the extended configuration and disengage from the step **126** on the first linear rack **111** in the retracted configuration. To facilitate the engagement and disengagement of the catch **134** from the step **126,** the step **126** may be angled or rounded, or a portion of the catch **134** facing the step **126** may be angled or rounded, or both.

As illustrated, the catch **134** is coupled to the bridge **119** through a pivot **135.** The first latch mechanism **109** may also include a cantilevered spring **136** configured to apply a torque to the catch **134** about the pivot **135** to bias the catch **134** against the first linear rack **111.** As illustrated, the cantilevered spring **136** may be integral to and extend from the catch **134.** Accordingly, the cantilevered spring **136** may be configured to slide through one or more guide points **137** of the bridge **119,** which constrain an end of the cantilevered spring **136** opposite the catch **134.**

Operation of this example latch mechanism is substantially as described above for FIGs. 2-8.

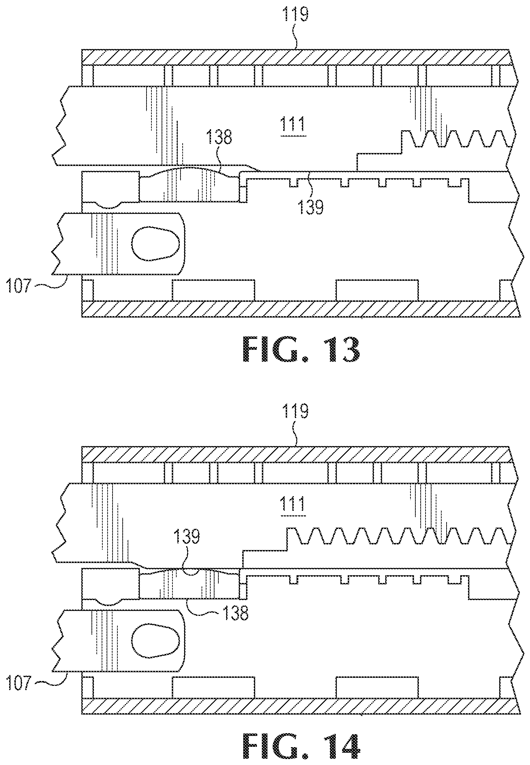

FIG. 13 is a close-up of a portion of an alternative arrangement for the game controller **100** of FIGs. 5 and 6, illustrating an example latch mechanism in an unlatched configuration. FIG. 14 is a close-up of a portion of an alternative arrangement for the game controller **100** of FIGs. 5 and 6, illustrating the example latch mechanism of FIG. 13 in a latched configuration. While illustrated and described for the first-handle side of the game controller **100,** the discussion for FIGs. 13 and 14 applies equally to the second-handle side of the game controller **100.** Hence, the example latch mechanism of FIGs. 13 and 14 may be the first latch mechanism **109** described above for FIGs. 5 and 6, the second latch mechanism **110** described above for FIGs. 5 and 6, or both the first latch mechanism **109** and the second latch mechanism **110.**

As illustrated in FIGs. 13 and 14, the example latch mechanism may include an elastic body **138** coupled to the bridge **119.** The elastic body **138** is configured to contact and frictionally engage a raised portion **139** on the first linear rack **111** in the extended configuration and disengage from the raised portion **139** in the retracted configuration. To facilitate the engagement and disengagement of the elastic body **138** from the raised portion **139,** the raised portion **139** may be angled or rounded, or the raised portion **139** may be angled or rounded, or both. As illustrated, the elastic body **138** is configured to elastically distort when engaged with the raised portion **139** of the first linear rack **111.**

Accordingly, in transitioning from the retracted configuration (an example of which is illustrated in FIG. 13) to the extended configuration (an example of which is illustrated in FIG. 14), the first linear rack **111** slides relative to the elastic body **138** until the elastic body **138** contacts the raised portion **139** of the first linear rack **111.** The elastic body **138** then elastically distorts and frictionally engages the raised portion **139** on the first linear rack **111.** Likewise, in transitioning from the extended configuration to the retracted configuration, the elastic body **138** is disengaged from the raised portion **139** of the first linear rack **111.** Otherwise, operation of this example latch mechanism is substantially as described above for FIGs. 2-8.

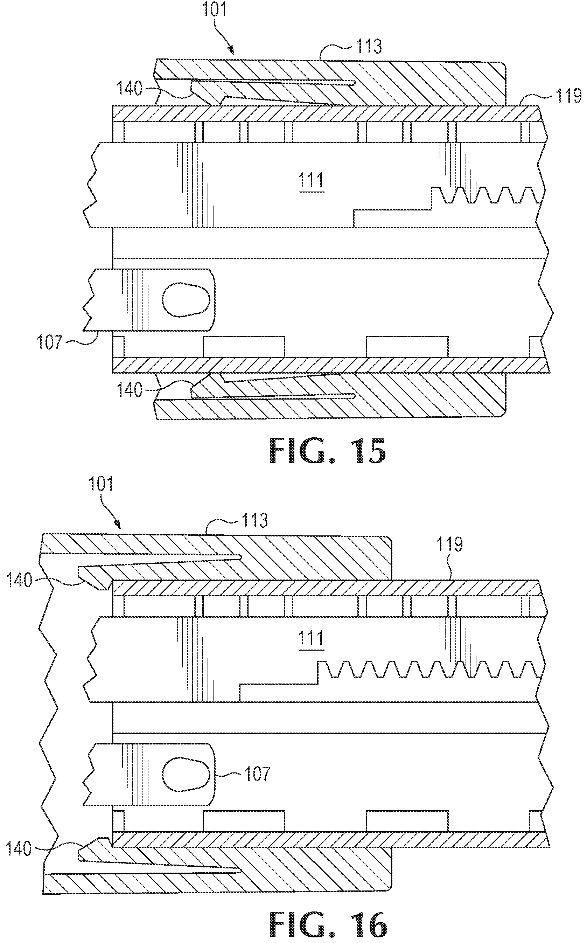

FIG. 15 is a close-up of a portion of an alternative arrangement for the game controller **100** of FIGs. 5 and 6, illustrating an example latch mechanism in an unlatched configuration. FIG. 16 is a close-up of a portion of an alternative arrangement for the game controller **100** of FIGs. 5 and 6, illustrating the example latch mechanism of FIG. 15 in a latched configuration. While illustrated and described for the first-handle side of the game controller **100,** the discussion for FIGs. 15 and 16 applies equally to the second-handle side of the game controller **100.** Hence, the example latch mechanism of FIGs. 15 and 16 may be the first latch mechanism **109** described above for FIGs. 5 and 6, the second latch mechanism **110** described above for FIGs. 5 and 6, or both the first latch mechanism **109** and the second latch mechanism **110.**

As illustrated in FIGs. 15 and 16, the example latch mechanism may include one or more resilient clips **140** on the first handle **101.** As illustrated, the resilient clip **140** may be within the guide portion **113** of the first handle **101.** The resilient clip **140** is configured to contact and engage an outer edge of the bridge **119** in the extended configuration and to disengage from the outer edge of the bridge **119** in the retracted configuration. To facilitate the engagement and disengagement of the resilient clip **140** from the outer edge of the bridge **119,** the resilient clip **140** may be angled or rounded, the outer edge may be angled or rounded, or both. The resilient clip **140** is biased against the outer edge of the bridge **119.** As illustrated in FIG. 15, the resilient clips **140** may be disengaged from the outer edge of the bridge **119** while still being in contact with the outer edge.

As illustrated in FIG. 16, the resilient clip **140** engages a terminus of the bridge 119. In other embodiments, the resilient clip **140** may engage an indentation or step on the outer edge of the bridge **119,** the indentation or step not being at the terminus of the bridge **119.**

Alternatively, one or more resilient clips **140** may be on the bridge **119** and be configured to contact and engage the first handle **101** in the extended configuration and to disengage from the first handle **101** in the retracted configuration.

With specific reference to the embodiment illustrated in FIGs. 15 and 16, in transitioning from the retracted configuration (an example of which is illustrated in FIG. 15) to the extended configuration (an example of which is illustrated in FIG. 16), the bridge **119** slides relative to the first handle **101** until the resilient clip **140** engages the terminus of the bridge **119.** Likewise, in transitioning from the extended configuration to the retracted configuration, the resilient clip **140** is disengaged from the terminus of the bridge **119.** Otherwise, operation of this example latch mechanism is analogous to what is described above for FIGs. 2-8.

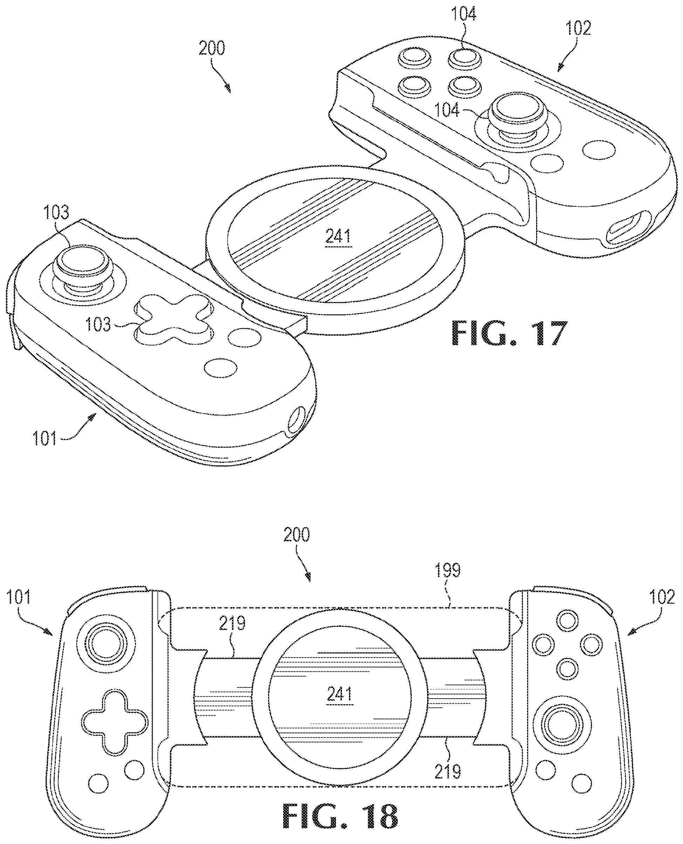

FIG. 17 is a perspective view of a game controller, according to embodiments. FIG. 18 is a top view of the game controller of FIG. 17, shown with an example mobile device. In addition to what is described here, the game controller **200** of FIGs. 17 and 18 may have the features and options as described above for the game controller **100** illustrated in each of FIGs. 1-16. Accordingly, the same reference numbers are used.

As illustrated in FIGs. 17 and 18, in configurations a game controller **200** may include a magnetic connector **241** within the bridge **219.** In configurations, the bridge **219** of FIGs. 17 and 18 may be as described above for the bridge **119** of FIGs. 1-16, except as noted here. The magnetic connector **241** is configured to magnetically retain a mobile device **199** to the game controller **200.** As examples, the magnetic connector **241** may retain the mobile device **199** to the game controller **200** by magnetic wireless connection, including by magnetic induction for near-field communication or for wireless charging, or both near-field communication and wireless charging. The wireless charging is to recharge the battery of the mobile device **199.** In configurations, the magnetic connector **241** allows the mobile device **199** to be retained to the game controller **200** without a wired connection. As noted, in configurations, the wireless connection, provided by the magnetic connector **241,** may allow the transfer of data between the game controller **200** and the mobile device **199** through near-field magnetic induction (NFMI). In configurations, the magnetic connector **241** may retain the mobile device **199** to the game controller **200** in addition to a wired connection, such as through the connector **125** (see FIGs. 1 and 2). In configurations that include a wired connection, versions may include spring mechanisms, such as the first spring mechanism **107** and the second spring mechanism **107** discussed above, to bias the first handle **101** or the second handle **102,** or both, toward the retracted configuration, thereby helping to retain the mobile device. Other versions may lack one or both of the first spring mechanism **107** or the second spring mechanism **107.**

Accordingly, in configurations the magnetic connector **241** may provide a wireless data connection, wireless charging, physical attachment to the game controller **200** through magnetic attraction, all three of those features, or any two of those features.

As illustrated in FIG. 18, a user may place the mobile device **199** onto the magnetic connector **241.** While the mobile device **199** is shown in landscape position in FIG. 18, in configurations the mobile device **199** instead may be placed onto the magnetic connector **241** in portrait position. In configurations, the first handle **101** and the second handle **102** of the game controller **200** may be translated in the retraction direction **122** toward the magnetic connector **241.** In configurations, when the mobile device **199** is magnetically retained to the game controller **200,** the first handle **101** and the second handle **102** contact the mobile device **199** as the first handle **101** and the second handle **102** translate in the retraction direction **122.** To remove the mobile device **199,** the first handle **101** and the second handle **102** of the game controller **200** may be translated in the extension direction **123** away from the magnetic connector **241.** In other configurations, the mobile device **199** may be removed from the magnetic connector **241** without the need to move the first handle **101** or the second handle **102** of the game controller **200,** such as by lifting the mobile device **199** off of the magnetic connector **241.**

In configurations, the bridge **219** is further configured such that the first handle **101** and the second handle **102** are substantially equidistant from the magnetic connector **241** when the first handle **101** and the second handle **102** are translating in the extension direction **123.** As used here, "substantially equidistant" means largely or essentially the same distance, without requiring perfect equivalence. In configurations, the bridge **219** is further configured such that the first handle **101** and the second handle **102** are substantially equidistant from the magnetic connector **241** when the first handle **101** and the second handle **102** are translating in the retraction direction **122.**

In configurations, the magnetic connector **241** is not within the bridge **219** but is instead affixed to or within another part of the game controller **200,** such as the first handle **101** or the second handle **102.**

In configurations, the magnetic connector **241** is also or instead configured to magnetically retain any magnetic object (that is, anything that is capable of being attracted by a magnet), such as an accessory, to the game controller **200.**

## Claims

1. A game controller (200) for a mobile device (199), the game controller comprising:
a first handle (101) comprising a user-accessible, first hardware interface (103) configured to accept touch inputs;
a second handle (102) comprising a user-accessible, second hardware interface (104) configured to accept touch inputs;
a bridge (219) coupling the first handle to the second handle;
a first linear rack (111) coupled to the first handle and in sliding engagement with the bridge;
a second linear rack (112) coupled to the second handle and in sliding engagement with the bridge;
a pinion (124) affixed to the bridge and in contact with each of the first linear rack and the second linear rack and configured to rotate relative to the bridge as the first linear rack and the second linear rack are translated relative to the pinion; and
a magnetic connector (241) within the bridge, the magnetic connector configured to magnetically retain a mobile device to the game controller;
wherein each of the first handle and the second handle are configured to translate in a retraction direction toward the magnetic connector and also to translate in an extension direction away from the magnetic connector; and
the bridge is configured so that the first handle and the second handle contact the mobile device, when the mobile device is magnetically retained to the game controller, as the first handle and the second handle translate in the retraction direction.

2. The game controller of claim 1, in which the bridge is further configured such that the first handle and the second handle are substantially equidistant from the magnetic connector when the first handle and the second handle are translating in the extension direction.

3. The game controller of claim 1 or 2, in which the bridge is further configured such that the first handle and the second handle are substantially equidistant from the magnetic connector when the first handle and the second handle are translating in the retraction direction.

4. The game controller of any preceding claim, in which the magnetic connector includes a wireless data connector.

5. The game controller of any of claims 1 to 4, in which the magnetic connector includes a wireless charger.

6. The game controller of any of claims 1 to 4, in which the magnetic connector includes both a wireless data connector and a wireless charger.

## Patentansprüche

1. Spielsteuerung (200) für eine mobile Vorrichtung (199), die Spielsteuerung umfassend:
einen ersten Griff (101), umfassend eine benutzerzugängliche, erste Hardware-Schnittstelle (103), die konfiguriert ist, um Berührungseingaben anzunehmen;
einen zweiten Griff (102), umfassend eine benutzerzugängliche, zweite Hardware-Schnittstelle (104), die konfiguriert ist, um Berührungseingaben anzunehmen;
eine Brücke (219), die den ersten Griff mit dem zweiten Griff koppelt;
ein erstes lineares Gestell (111), das mit dem ersten Griff gekoppelt ist und in Gleiteingriff mit der Brücke steht;
ein zweites lineares Gestell (112), das mit dem zweiten Griff gekoppelt ist und in Gleiteingriff mit der Brücke steht;
ein Ritzel (124), das an der Brücke befestigt ist und mit jedem des ersten linearen Gestells und des zweiten linearen Gestells in Kontakt steht und konfiguriert ist, um sich relativ zu der Brücke zu drehen, während das erste lineare Gestell und das zweite lineare Gestell relativ zu dem Ritzel verschoben werden; und
einen magnetischen Verbinder (241) innerhalb der Brücke, wobei der magnetische Verbinder konfiguriert ist, um eine mobile Vorrichtung an der Spielsteuerung magnetisch zu halten;
wobei der erste Griff und der zweite Griff jeweils konfiguriert sind, um in einer Rückzugsrichtung zu dem magnetischen Verbinder hin verschoben zu werden und ebenso in einer Erstreckungsrichtung von dem magnetischen Verbinder weg verschoben zu werden; und
die Brücke konfiguriert ist, sodass der erste Griff und der zweite Griff die mobile Vorrichtung kontaktieren, wenn die mobile Vorrichtung an der Spielsteuerung magnetisch gehalten wird, während der erste Griff und der zweite Griff in die Rückzugsrichtung verschoben werden.

2. Spielsteuerung nach Anspruch 1, wobei die Brücke ferner derart konfiguriert ist, dass der erste Griff und der zweite Griff im Wesentlichen gleich weit von dem magnetischen Verbinder entfernt sind, wenn der erste Griff und der zweite Griff in der Erstreckungsrichtung verschoben werden.

3. Spielsteuerung nach Anspruch 1 oder 2, wobei die Brücke ferner derart konfiguriert ist, dass der erste Griff und der zweite Griff im Wesentlichen gleich weit von dem magnetischen Verbinder entfernt sind, wenn der erste Griff und der zweite Griff in der Rückzugsrichtung verschoben werden.

4. Spielsteuerung nach einem der vorstehenden Ansprüche, wobei der magnetische Verbinder einen drahtlosen Datenverbinder einschließt.

5. Spielsteuerung nach einem der Ansprüche 1 bis 4, wobei der magnetische Verbinder ein drahtloses Ladegerät einschließt.

6. Spielsteuerung nach einem der Ansprüche 1 bis 4, wobei der magnetische Verbinder sowohl einen drahtlosen Datenverbinder als auch ein drahtloses Ladegerät einschließt.

## Revendications

1. Contrôleur de jeu (200) pour un dispositif mobile (199), le contrôleur de jeu comprenant :
une première poignée (101) comprenant une première interface matérielle (103) accessible par un utilisateur conçue pour accepter des entrées tactiles ;
une seconde poignée (102) comprenant une seconde interface matérielle (104) accessible par un utilisateur conçue pour accepter des entrées tactiles ;
un pont (219) accouplant la première poignée à la seconde poignée ;
une première crémaillère linéaire (111) accouplée à la première poignée et en prise coulissante avec le pont ;
une seconde crémaillère linéaire (112) accouplée à la seconde poignée et en prise coulissante avec le pont ;
un pignon (124) fixé au pont et en contact avec chacune de la première crémaillère linéaire et de la seconde crémaillère linéaire et conçu pour tourner par rapport au pont à mesure que la première crémaillère linéaire et la seconde crémaillère linéaire sont déplacées en translation par rapport au pignon ; et
un connecteur magnétique (241) au sein du pont, le connecteur magnétique étant conçu pour retenir magnétiquement un dispositif mobile sur le contrôleur de jeu ;
dans lequel chacune de la première poignée et de la seconde poignée est conçue pour se déplacer en translation dans une direction de rétraction vers le connecteur magnétique et également pour se déplacer en translation dans une direction d'extension à l'écart du connecteur magnétique ; et
le pont est conçu de sorte que la première poignée et la seconde poignée entrent en contact avec le dispositif mobile, lorsque le dispositif mobile est retenu magnétiquement sur le contrôleur de jeu, à mesure que la première poignée et la seconde poignée se déplacent en translation dans la direction de rétraction.

2. Contrôleur de jeu selon la revendication 1, dans lequel le pont est en outre conçu de telle sorte que la première poignée et la seconde poignée sont sensiblement équidistantes du connecteur magnétique lorsque la première poignée et la seconde poignée se déplacent en translation dans la direction d'extension.

3. Contrôleur de jeu selon la revendication 1 ou 2, dans lequel le pont est en outre conçu de telle sorte que la première poignée et la seconde poignée sont sensiblement équidistantes du connecteur magnétique lorsque la première poignée et la seconde poignée se déplacent en translation dans la direction de rétraction.

4. Contrôleur de jeu selon l'une quelconque revendication précédente, dans lequel le connecteur magnétique comporte un connecteur de données sans fil.

5. Contrôleur de jeu selon l'une quelconque des revendications 1 à 4, dans lequel le connecteur magnétique comporte un chargeur sans fil.

6. Contrôleur de jeu selon l'une quelconque des revendications 1 à 4, dans lequel le connecteur magnétique comporte à la fois un connecteur de données sans fil et un chargeur sans fil.
